# EUROPEAN PATENT APPLICATION

(11) **EP 3 967 985 A1**
(43) Date of publication of application: **16.03.2022**
(21) Application number: 20833378.1
(22) Date of filing: 25.04.2020
(51) Int. Cl.: G01D 21/02

(54) **DETECTION METHOD AND APPARATUS USED FOR FUEL TANK, AND SERVER**

(30) Priority: 27.06.2019 CN 201910572848
(71) Applicant: Nanjing Zeaho Electronic Technology Co., Ltd, Nanjing, Jiangsu 210000 (CN)
(72) Inventor: LIU, Zhaotao, Nanjing, Jiangsu 210000 (CN); HUANG, Liang, Nanjing, Jiangsu 210000 (CN)
(74) Representative: Dr. Gassner & Partner mbB
(86) International application number: PCT/CN2020/086886
(87) International publication number: WO 2020/259050

(57) **Abstract**

A detection method used for a fuel tank, comprising: receiving a result of determining whether a constant-speed refueling condition is satisfied (S100); if determined that the constant-speed refueling condition is satisfied, then receiving detection parameters collected from a refueling terminal by means of a sensor according to a preset frequency (S102); and inputting the detection parameters into a preset shape determination model, and determining the shape of a staged fuel tank (S104). Thus, the technical problem of poor fuel tank metering management that is caused by the inability to detect different types of fuel tank shapes is solved.

## Description

### Technical Field

This application relates to the field of fuel tank calibration, and specifically, to a method and device for detecting a fuel tank, and a server.

### Background

Detection on a fuel tank includes fuel level detection, fuel level statue detection, and detection whether refueling is made, and so on.

Inventors discover that, different fuel tanks have different shapes, so that there has been lack of a method for detecting a shape of a fuel tank, which further influences fuel tank metering management.

In view of a problem in the related art that cannot detect shapes of different fuel tanks to cause poor fuel tank metering management, no effective solutions have been proposed currently.

### Summary

This application is mainly intended to provide a method and device for detecting a fuel tank, and a server, to resolve a problem of poor fuel tank metering management that is caused by the inability to detect different types of fuel tank shapes.

In order to realize the above purpose, according to one aspect of this application, a method for detecting a fuel tank is provided.

The method for detecting the fuel tank according to this application includes: receiving a result of determining whether a constant-speed refueling condition is satisfied; if determined that the constant-speed refueling condition is satisfied, then receiving detection parameters collected from a refueling terminal by means of a sensor according to a preset frequency; and inputting the detection parameters to a preset shape determination model, and determining the shape of the staged fuel tank.

Further, the operation of receiving detection parameters collected from the refueling terminal by means of the sensor according to the preset frequency includes a receiving unit and a storage unit. The receiving unit is configured to receive a parameter set of liquid level pressure collected from the refueling terminal by means of the sensor according to the preset frequency. The storage unit is configured to record and store the parameter set of liquid level pressure.

Further, the operation after inputting the detection parameters to the preset shape determination model, and determining the shape of the staged fuel tank further includes: storing the shape of the staged fuel tank; and presuming the shape of the fuel tank according to the shape of the staged fuel tank determined a plurality of times.

Further, the operation after receiving the result of determining whether the constant-speed refueling condition is satisfied further includes: if the constant-speed refueling condition is not satisfied, stopping shape determination, and outputting a first stopping reason at an intelligent terminal.

Further, the operation before receiving the result of determining whether the constant-speed refueling condition is satisfied further includes: detecting a refueling event by using a fuel tank cap detecting device on the refueling terminal; and if the refueling event is detected, determining whether the constant-speed refueling condition is satisfied.

Further, the operation of inputting the detection parameters to the preset shape determination model, and determining the shape of the staged fuel tank includes: extracting liquid level pressure in the detection parameters; drawing a refueling curve according to variation of the liquid level pressure with time; and judging the shape of the staged fuel tank according to the refueling curve.

In order to realize the above purpose, according to another aspect of this application, a device for detecting a fuel tank is provided.

The device for detecting the fuel tank according to this application includes: a first receiving module, a second receiving module, and a shape determination model. The first receiving module is configured to receive a result of determining whether a constant-speed refueling condition is satisfied. The second receiving module is configured to receive detection parameters collected from a refueling terminal by means of a sensor according to a preset frequency if the constant-speed refueling condition is satisfied. The shape determination model is configured to input the detection parameters to a preset shape determination model, and to determine a shape of a staged fuel tank.

Further, the device further includes a storage module and a presumption module. The storage module is configured to store the shape of the staged fuel tank. The presumption module is configured to presume the shape of the fuel tank according to the shape of the staged fuel tank determined a plurality of times.

Further, the device further includes a stopping module. The stopping module is configured to, if the constant-speed refueling condition is not satisfied, stop shape determination, and output a first stopping reason at an intelligent terminal.

In order to realize the above purpose, according to another aspect of this application, a server is provided.

The server according to this application includes the foregoing detection method.

According to the method and device for detecting a fuel tank, and a server in embodiments of this application, a result of determining whether the constant-speed refueling condition is satisfied is received. If the constant-speed refueling condition is satisfied, detection parameters collected from a refueling terminal by means of a sensor according to a preset frequency is received. The detection parameters are input to a preset shape determination model, and a shape of a staged fuel tank is determined. In this way, a purpose of determining the shape of the fuel tank is achieved. Therefore, a technical effect of fuel tank metering management is realized, thereby resolving a technical problem of poor fuel tank metering management that is caused by the inability to detect different types of fuel tank shapes.

### Brief Description of the Drawings

The accompanying drawings described herein are used to provide a further understanding of this application, constitute a part of this application, so that other features, objectives and advantages of this application become more obvious. The exemplary embodiments of this application and the description thereof are used to explain this application, but do not constitute improper limitations to this application. In the drawings:
Fig. 1 is a flowchart of a method for detecting a fuel tank according to a first embodiment of this application.
Fig. 2 is a flowchart of a method for detecting a fuel tank according to a second embodiment of this application.
Fig. 3 is a flowchart of a method for detecting a fuel tank according to a third embodiment of this application.
Fig. 4 is a flowchart of a method for detecting a fuel tank according to a fourth embodiment of this application.
Fig. 5 is a flowchart of a method for detecting a fuel tank according to a fifth embodiment of this application.
Fig. 6 is a flowchart of a method for detecting a fuel tank according to a sixth embodiment of this application.
Fig. 7 is a schematic structural diagram of a device for detecting a fuel tank according to a first embodiment of this application.
Fig. 8 is a schematic structural diagram of a device for detecting a fuel tank according to a second embodiment of this application.
Fig. 9 is a schematic structural diagram of a device for detecting a fuel tank according to a third embodiment of this application.

### Detailed Description of the Embodiments

In order to enable those skilled in the art to better understand the solutions of this application, the technical solutions in the embodiments of this application will be clearly and completely described below in combination with the drawings in the embodiments of this application. It is apparent that the described embodiments are only part of the embodiments of this application, not all the embodiments. All other embodiments obtained by those of ordinary skill in the art on the basis of the embodiments in this application without creative work shall fall within the scope of protection of this application.

It is to be noted that terms "first", "second" and the like in the description, claims and the above mentioned drawings of this application are used for distinguishing similar objects rather than describing a specific sequence or a precedence order. It should be understood that the data used in such a way may be exchanged where appropriate, in order that the embodiments of this application described here can be implemented. In addition, terms "include" and "have" and any variations thereof are intended to cover non-exclusive inclusions. For example, it is not limited for processes, methods, systems, products or devices containing a series of steps or units to clearly list those steps or units, and other steps or units which are not clearly listed or are inherent to these processes, methods, products or devices may be included instead.

In this application, orientation or position relationships indicated by terms "upper", "lower", "left", "right", "front", "back", "top", "bottom", "inside", "outside" "in", "vertical", "horizontal", "transverse", "longitudinal" and the like are orientation or position relationships shown in the drawings. These terms are mainly used to better describe this application and its embodiments, rather than limit that the indicated devices, components and constituting parts must be in specific orientations or structured and operated in the specific orientations.

Furthermore, the above mentioned part of terms may be not only used to represent the orientation or position relationships, but used to represent other meanings, for example, term "on" may be used to represent certain relationship of dependence or connection relationship in some cases. For those of ordinary skill in the art, specific meanings of these terms in this application may be understood according to a specific condition.

In addition, terms "mount", "configure", "provide", "connect", "link" and "sleeved" should be broadly understood. For example, the term "connect" may be fixed connection, detachable connection or integral construction. As an alternative, the term "connect" may be mechanical connection, or electrical connection. As an alternative, the term "connect" may be direct connection, or indirect connection through a medium, or communication in two devices, components or constituting parts. For those of ordinary skill in the art, specific meanings of the above mentioned terms in this application may be understood according to a specific condition.

It is to be noted that the embodiments in this application and the features in the embodiments may be combined with one another without conflict. This application will now be described below in detail with reference to the drawings and the embodiments.

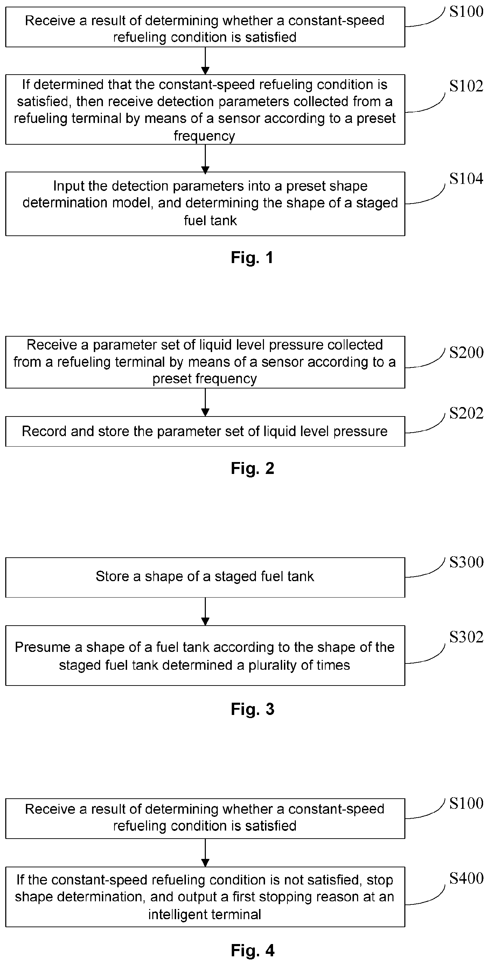

An embodiment of this application provides a method for detecting a fuel tank. As shown in Fig. 1, the method includes the following S100 to S104.

At S100, a result of determining whether a constant-speed refueling condition is satisfied is received.

Determining whether the constant-speed refueling condition is satisfied may be automatically performed by means of a refueling terminal, may be automatically performed by means of an intelligent terminal, or may also be performed by a user through cooperation with the intelligent terminal. In this embodiment, preferably, judgment is completed by the user through cooperation with the intelligent terminal. Specifically, application processing software is installed on the intelligent terminal, so that the user may firstly judge whether to manually refuel or refuel by using a refueling gun. If it is the latter, the user then opens the software to operate in an interface of the software, so as to input refueling with the refueling gun, and a server receives the message, that is, that the constant-speed refueling condition is met is judged. If no messages are received, it defaults that the constant-speed refueling condition is not met.

Preferably, as shown in Fig. 4, the operation of receiving the result of determining whether the constant-speed refueling condition is satisfied further includes the following step.

At S400, if the constant-speed refueling condition is not satisfied, shape determination is stopped, and a first stopping reason is output at an intelligent terminal.

When the server determines that the constant-speed refueling condition is not satisfied, a procedure of receiving the detection parameters is not performed. The first stopping reason is output at the intelligent terminal. In this way, the user may check the stopping reason through operation. A shape of a fuel tank is determined only under constant-speed refueling, otherwise determination is not performed. Thus, if refueling is not performed with a constant speed, a shape judged by a shape determination model is not referential. Therefore, the constant-speed refueling condition must be satisfied before the procedure is performed.

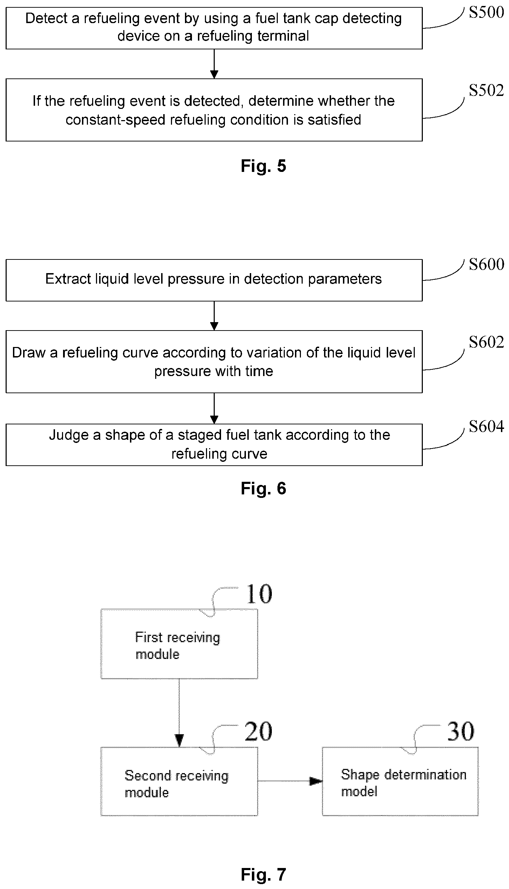

Preferably, as shown in Fig. 5, the operation before receiving the result of determining whether the constant-speed refueling condition is satisfied further includes the following steps.

At S500, a refueling event is detected by using a fuel tank cap detecting device on the refueling terminal.

At S502, if the refueling event is detected, whether the constant-speed refueling condition is satisfied is determined.

Only after a certain condition is satisfied, the determination of whether the constant-speed refueling condition is satisfied can be triggered.

In this embodiment, preferably, when the fuel tank cap detecting device on the refueling terminal detects the refueling event, a prompt message is sent to the intelligent terminal with a binding relationship, to prompt the user to start refueling. After receiving the message, the user may click the prompt message, so that the application processing software can be automatically opened, then corresponding operation is performed, thereby completing the judgment of whether the constant-speed refueling condition is satisfied.

If the fuel tank cap detecting device on the refueling terminal does not detect the refueling event, a link of a second stopping reason for no refueling event is output at the intelligent terminal. In this embodiment, preferably, after receiving the stopping reason, the user may click the link to directly open the software, so as to enter a software interface to check the second stopping reason. In this way, the user may continue to operate to restart a program after checking and eliminating the reason on site.

When there is the refueling event, the prompt message may be actively sent. Prompt personnel complete the determination of whether the constant-speed refueling condition is satisfied according to the operation of the application processing software. When there is no refueling events, the procedure is stopped, and the determination of whether the constant-speed refueling condition is satisfied can be continued only after the user opens the software to operate.

The server only receives detection parameters sent by the refueling terminal to determine the shape of the fuel tank, while the refueling event is detected, and the constant-speed refueling condition is satisfied.

At S102, if the constant-speed refueling condition is satisfied, the detection parameters collected from a refueling terminal by means of a sensor according to a preset frequency is received.

Specifically, as shown in Fig. 2, the operation of receiving the detection parameter collected from the refueling terminal by means of the sensor according to the preset frequency includes the following steps.

At S200, a parameter set of liquid level pressure collected from the refueling terminal by means of the sensor according to the preset frequency is received.

At S202, the parameter set of liquid level pressure is recorded and stored.

The determination of the shape of the fuel tank is realized through a plurality of detection parameters during refueling. The sensor can periodically collect the detection parameters. That is to say, the liquid level pressure is detected and recorded every a period of time, so as to acquire one parameter set of the liquid level pressure. The liquid level pressure in the parameter set of the liquid level pressure is stored one by one. After refueling is finished, the liquid level pressure is uniformly uploaded to the server, to judge the shape of the fuel tank.

At S104, the detection parameters are input to a preset shape determination model, and a shape of a staged fuel tank is determined.

Specifically, as shown in Fig. 6, the operation of inputting the detection parameters to the preset shape determination model, and determining the shape of the staged fuel tank includes the following steps.

At S600, the liquid level pressure in the detection parameters is extracted.

At S602, a refueling curve is drew according to variation of the liquid level pressure with time.

At S604, the shape of the staged fuel tank is determined according to the refueling curve.

Specifically, presuming a refueling rate of a refueling gun is constant, Δv generated in Δt is the same. If a collection rate of hardware is constant, the Δt between two adjacent hydraulic pressure data points is the same, and the corresponding Δv is the same.

Pi{1...n} is set as a hydraulic pressure value collected at a fixed frequency at a refueling phase. The empty liquid level pressure value is known as P0. The bottom shape of the fuel tank is regular. Pn is a collected maximum hydraulic pressure value point. P1 is a minimum hydraulic pressure value point collected at one time.

Polynomial fitting (Pi, i-1) is performed by using Pi{1...m}(m<n) to acquire a slope k and an offset b. Subscript Index0: Index0 = P0 * k + b corresponding to P0 is calculated by using the k, the b and the empty liquid level pressure value P0.

The variation of the liquid level pressure with time is shown as follows: Index = P * k + b.

Referring to the variation of the liquid level pressure with time: Index = P * k + b, the subscripts of liquid level pressure values may be successively calculated. The refueling curve can be fitted according to the subscripts. By means of the refueling curve, a shape of some part of the fuel tank corresponding to this refueling can be determined, which is the shape of the staged fuel tank. Therefore, guarantee is provided for acquiring the entire shape of the fuel tank.

Preferably, as shown in Fig. 3, the operation after inputting the detection parameters to the preset shape determination model, and determining the shape of the staged fuel tank further includes the following steps.

At S300, the shape of the staged fuel tank is stored.

At S302, the shape of the fuel tank is presumed according to the shape of the staged fuel tank determined a plurality of times.

Through refueling for the plurality of times, it must include a state that fuel is refueled from a bottom of an empty fuel tank and a state that the fuel is refueled to a top of the fuel tank. The shape of the staged fuel tank at each part of the fuel tank may be acquired by inputting the detection parameters at each time to the shape determination model, and the shape of the staged fuel tank corresponds to the detection parameter. Through a magnitude relationship between the detection parameters, a plurality of shapes of the staged fuel tank are spliced into the shape of the fuel tank in order. Therefore, intelligent calculation of the shape of the fuel tank is realized, and further fuel tank metering management is achieved.

It may be learned from the above description that, in this application, the following technical effects are realized.

According to the method and device for detecting a fuel tank, and a server in embodiments of this application, a result of determining whether the constant-speed refueling condition is satisfied is received. If the constant-speed refueling condition is satisfied, detection parameters collected from a refueling terminal by means of a sensor according to a preset frequency is received. The detection parameters are input to a preset shape determination model, and a shape of a staged fuel tank is determined. In this way, a purpose of determining the shape of the fuel tank is achieved. Therefore, a technical effect of fuel tank metering management is realized, thereby resolving a technical problem of poor fuel tank metering management that is caused by the inability to detect different types of fuel tank shapes.

It is to be noted that the steps shown in the flow diagram of the accompanying drawings may be executed in a computer system, such as a set of computer-executable instructions, and although a logical sequence is shown in the flow diagram, in some cases, the steps shown or described may be executed in a different order than here.

Embodiments of this application further provide a device configured to implement the above detection method. As shown in Fig. 7, the device includes a first receiving module 10.

The first receiving module 10 is configured to receive a result of determining whether a constant-speed refueling condition is satisfied.

Determining whether the constant-speed refueling condition is satisfied may be automatically performed by means of a refueling terminal, may be automatically performed by means of an intelligent terminal, or may also be performed by a user through cooperation with the intelligent terminal. In this embodiment, preferably, judgment is completed by the user through cooperation with the intelligent terminal. Specifically, application processing software is installed on the intelligent terminal, so that the user may firstly judge whether to manually refuel or refuel by using a refueling gun. If it is the latter, the user then opens the software to operate in an interface of the software, so as to input refueling with the refueling gun, and a server receives the message, that is, that the constant-speed refueling condition is met is judged. If no messages are received, it defaults that the constant-speed refueling condition is not met.

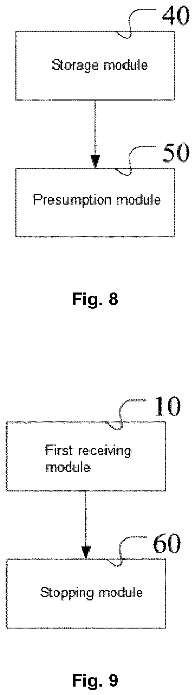

Preferably, as shown in Fig. 9, the device further includes a stopping module.

The stopping module is configured to stop shape determination, and output a first stopping reason at an intelligent terminal if the constant-speed refueling condition is not satisfied.

When the server determines that the constant-speed refueling condition is not satisfied, a procedure of receiving the detection parameters is not performed. The first stopping reason is output at the intelligent terminal. In this way, the user may check the stopping reason through operation. A shape of a fuel tank is determined only under constant-speed refueling, otherwise determination is not performed. Thus, if refueling is not performed with a constant speed, a shape judged by a shape determination model is not referential. Therefore, the constant-speed refueling condition must be satisfied before the procedure is performed.

Preferably, the operation before receiving the result of determining whether the constant-speed refueling condition is satisfied further includes the following operations.

A refueling event is detected by using a fuel tank cap detecting device on the refueling terminal.

If the refueling event is detected, whether the constant-speed refueling condition is satisfied is determined.

Only after a certain condition is satisfied, the determination of whether the constant-speed refueling condition is satisfied can be triggered.

In this embodiment, preferably, when the fuel tank cap detecting device on the refueling terminal detects the refueling event, a prompt message is sent to the intelligent terminal with a binding relationship, to prompt the user to start refueling. After receiving the message, the user may click the prompt message, so that the application processing software can be automatically opened, then corresponding operation is performed, thereby completing the judgment of whether the constant-speed refueling condition is satisfied.

If the fuel tank cap detecting device on the refueling terminal does not detect the refueling event, a link of a second stopping reason for no refueling event is output at the intelligent terminal. In this embodiment, preferably, after receiving the stopping reason, the user may click the link to directly open the software, so as to enter a software interface to check the second stopping reason. In this way, the user may continue to operate to restart a program after checking and eliminating the reason on site.

When there is the refueling event, the prompt message may be actively sent. Prompt personnel complete the determination of whether the constant-speed refueling condition is satisfied according to the operation of the application processing software. When there is no refueling events, the procedure is stopped, and the determination of whether the constant-speed refueling condition is satisfied can be continued only after the user opens the software to operate.

The server only receives detection parameters sent by the refueling terminal to determine the shape of the fuel tank, while the refueling event is detected, and the constant-speed refueling condition is satisfied.

A second receiving module 20 is configured to receive detection parameters collected from the refueling terminal by means of the sensor according to the preset frequency if the constant-speed refueling condition is satisfied.

Specifically, as shown in Fig. 2, the operation of receiving the detection parameter collected from the refueling terminal by means of the sensor according to the preset frequency includes the following operations.

A parameter set of liquid level pressure collected from the refueling terminal by means of the sensor according to the preset frequency is received.

The parameter set of liquid level pressure is recorded and stored.

The determination of the shape of the fuel tank is realized through a plurality of detection parameters during refueling. The sensor can periodically collect the detection parameters. That is to say, the liquid level pressure is detected and recorded every a period of time, so as to acquire one parameter set of the liquid level pressure. The liquid level pressure in the parameter set of the liquid level pressure is stored one by one. After refueling is finished, the liquid level pressure is uniformly uploaded to the server, to judge the shape of the fuel tank.

A shape determination model 30 is configured to input the detection parameters to a preset shape determination model, and to determine a shape of a staged fuel tank.

Specifically, the operation of inputting the detection parameters to the preset shape determination model, and determining the shape of the staged fuel tank includes the following operations.

Liquid level pressure in the detection parameter is extracted.

A refueling curve is drew according to variation of the liquid level pressure with time.

The shape of the phased fuel tank is determined according to the refueling curve.

Specifically, presuming a refueling rate of a refueling gun is constant, Δv generated in Δt is the same. If a collection rate of hardware is constant, the Δt between two adjacent hydraulic pressure data points is the same, and the corresponding Δv is the same.

Pi{1...n} is set as a hydraulic pressure value collected at a fixed frequency at a refueling phase. The empty liquid level pressure value is known as P0. The bottom shape of the fuel tank is regular. Pn is a collected maximum hydraulic pressure value point. P1 is a minimum hydraulic pressure value point collected at one time.

Polynomial fitting (Pi, i-1) is performed by using Pi{1...m}(m<n) to acquire a slope k and an offset b. Subscript Index0: Index0 = P0 * k + b corresponding to P0 is calculated by using the k, the b and the empty liquid level pressure value P0.

The variation of the liquid level pressure with time is shown as follows: Index = P * k + b.

Referring to the variation of the liquid level pressure with time: Index = P * k + b, the subscripts of liquid level pressure values may be successively calculated. The refueling curve can be fitted according to the subscripts. By means of the refueling curve, a shape of some part of the fuel tank corresponding to this refueling can be determined, which is the shape of the staged fuel tank. Therefore, guarantee is provided for acquiring the entire shape of the fuel tank.

Preferably, as shown in Fig. 8, the device further includes a stopping module.

The storage module 40 is configured to store the shape of the staged fuel tank.

The presumption module 50 is configured to presume the shape of the fuel tank according to the shape of the staged fuel tank determined a plurality of times.

Through refueling for the plurality of times, it must include a state that fuel is refueled from a bottom of an empty fuel tank and a state that the fuel is refueled to a top of the fuel tank. The shape of the staged fuel tank at each part of the fuel tank may be acquired by inputting the detection parameters at each time to the shape determination model, and the shape of the staged fuel tank corresponds to the detection parameter. Through a magnitude relationship between the detection parameters, a plurality of shapes of the staged fuel tank are spliced into the shape of the fuel tank in order. Therefore, intelligent calculation of the shape of the fuel tank is realized, and further fuel tank metering management is achieved.

It may be learned from the above description that, in this application, the following technical effects are realized.

According to the method and device for detecting a fuel tank, and a server in embodiments of this application, a result of determining whether the constant-speed refueling condition is satisfied is received. If the constant-speed refueling condition is satisfied, detection parameters collected from a refueling terminal by means of a sensor according to a preset frequency is received. The detection parameters are input to a preset shape determination model, and a shape of a staged fuel tank is determined. In this way, a purpose of determining the shape of the fuel tank is achieved. Therefore, a technical effect of fuel tank metering management is realized, thereby resolving a technical problem of poor fuel tank metering management that is caused by the inability to detect different types of fuel tank shapes.

It is apparent that those skilled in the art should understand that the above mentioned modules or steps of this application may be implemented by a general computing device, and may also be gathered together on a single computing device or distributed in network composed of multiple computing devices. Optionally, the above mentioned modules or steps of this application may be implemented with program codes executable by the computing device, so that may be stored in a storage device for execution by the computing device, or can be fabricated into individual integrated circuit modules respectively, or multiple modules or steps thereof are fabricated into a single integrated circuit module for implementation. In this way, this application is not limited to any specific combination of hardware and software.

The above are only the preferred embodiments of this application and are not intended to limit this application. For those skilled in the art, this application may have various modifications and variations. Any modifications, equivalent replacements, improvements and the like made within the spirit and principle of this application shall fall within the scope of protection of this application.

## Claims

1. A method for detecting a fuel tank, comprising:
receiving a result of determining whether a constant-speed refueling condition is satisfied;
if determined that the constant-speed refueling condition is satisfied, then receiving detection parameters collected from a refueling terminal by means of a sensor according to a preset frequency; and
inputting the detection parameters into a preset shape determination model, and determining the shape of a staged fuel tank.

2. The detection method as claimed in claim 1, wherein the operation of receiving the detection parameters collected from the refueling terminal by means of the sensor according to the preset frequency comprises:
receiving a parameter set of liquid level pressure collected from the refueling terminal by means of the sensor according to the preset frequency; and
recording and storing the parameter set of liquid level pressure.

3. The detection method as claimed in claim 1, wherein the operation after inputting the detection parameters to the preset shape determination model, and determining the shape of the staged fuel tank further comprises:
storing the shape of the staged fuel tank; and
presuming the shape of the fuel tank according to the shape of the staged fuel tank determined a plurality of times.

4. The detection method as claimed in claim 1, wherein the operation after receiving the result of determining whether the constant-speed refueling condition is satisfied further comprises:
if the constant-speed refueling condition is not satisfied, stopping shape determination, and outputting a first stopping reason at an intelligent terminal.

5. The detection method as claimed in claim 1, wherein the operation before receiving the result of determining whether the constant-speed refueling condition is satisfied further comprises:
detecting a refueling event by using a fuel tank cap detecting device on the refueling terminal; and
if the refueling event is detected, determining whether the constant-speed refueling condition is satisfied.

6. The detection method as claimed in claim 1, wherein the operation of inputting the detection parameters to the preset shape determination model, and determining the shape of the staged fuel tank comprises:
extracting liquid level pressure in the detection parameters;
drawing a refueling curve according to variation of the liquid level pressure with time; and
judging the shape of the staged fuel tank according to the refueling curve.

7. A device for detecting a fuel tank, comprising:
a first receiving module, configured to receive a result of determining whether a constant-speed refueling condition is satisfied;
a second receiving module, configured to receive detection parameters collected from a refueling terminal by means of a sensor according to a preset frequency if the constant-speed refueling condition is satisfied; and
a shape determination model, configured to input the detection parameters to a preset shape determination model, and to determine a shape of a staged fuel tank.

8. The detection device as claimed in claim 1, wherein the detection device further comprises:
a storage module, configured to store the shape of the staged fuel tank; and
a presumption module, configured to presume the shape of the fuel tank according to the shape of the staged fuel tank determined a plurality of times.

9. The detection device as claimed in claim 1, wherein the detection device further comprises:
a stopping module, configured to stop shape determination, and output a first stopping reason at an intelligent terminal if the constant-speed refueling condition is not satisfied.

10. A server, comprising the detection method according to any one of claims 1 to 6.
